# EUROPEAN PATENT APPLICATION

(11) **EP 3 428 066 A1**
(43) Date of publication of application: **16.01.2019**
(21) Application number: 18183511.7
(22) Date of filing: 13.07.2018
(51) Int. Cl.: B64D 15/12

(54) **REDUNDANT HEATING OF SURFACES OF AN AIRCRAFT SKIN FOR CONTROLLING ICE ACCRETION**

(30) Priority: 13.07.2017 US 201715649216
(71) Applicant: Goodrich Corporation, Charlotte, NC 28217-4578 (US)
(72) Inventor: BOTURA, Galdemir Cezar, Akron, OH 44313 (US); HU, Jin, Hudson, OH 44236 (US); MULLEN, James A., Wadsworth, OH 44281 (US); ZHAO, Wenping, Glastonbury, CT 06033 (US)
(74) Representative: Dehns

(57) **Abstract**

Apparatus and associated methods relate to providing redundant heating elements to a surface of an aircraft skin (16) for the purpose of controlling ice accretion thereon. Each of the redundant heating elements can be used alone or in conjunction with the other(s) of the redundant heating elements. In some embodiments, a second heating element can be used if or when a first heating element fails and/or is insufficient to perform the heating task. In some embodiments, the first and second heating elements can be controlled so as to create a heating profile of the surface of the aircraft skin (16). A heat controller (18) provides electrical control signals to the first and second heating element. In some embodiments, the heat controller (18) can provide such electrical control signals in response to detected ice accretion, flight conditions, and/or detected atmospheric conditions.

## Description

### BACKGROUND

Various cloud conditions can present risks to aircraft when traveling through them. If the temperature of a cloud atmosphere is below the freezing point for water, water droplets can become super-cooled liquid droplets. These super-cooled liquid droplets can then undergo a liquid-to-solid phase change upon impact with an aircraft surface. Ice accretes at different surface regions for different sizes of the super-cooled liquid droplets in the cloud atmosphere. Some surface regions, however, are more prone than others to accrete ice thereon.

Super-cooled small water droplets tend to form ice only on leading edges of an aircraft's exterior surface. Super-cooled large water droplets (SLDs), however, can strike the leading edge of a wing and run back past any icing protection systems, or can traverse airflow vectors and strike surfaces aft of these leading edges. Ice that forms on unprotected surface regions can severely alter the aerodynamics of the aircraft. Such ice accretion may cause aircraft stall or result in unpredictable aircraft control variation that might lead to flight issues. When in a cloud, ice can form on control surfaces and/or lift surfaces.

Many aircraft have various methods for providing heat to some regions of the aircraft surface for the purpose of melting ice that has accreted thereon, or for preventing the accretion of ice thereon, when flying through an atmosphere containing super-cooled liquid droplets. This disclosure is directed to providing redundant heating of such aircraft surfaces.

### SUMMARY

Apparatus and associated methods relate to a system for providing redundant heating of a surface of an aircraft skin. The system includes a heating member and a heat controller. The heating member includes a first heating element configured to conformally attach to the surface of the aircraft skin. The heating member includes an electrically-insulative layer configured to conformally attach to the first heating element. The heating member includes a second heating element configured to conformally attach to the electrically-insulative layer. The heat controller is electrically coupled to the first and second heating elements and is configured to provide an electrical control signal to each of the first and second heating elements.

Some embodiments relate to a method for providing redundant heating of a surface of an aircraft skin. The method includes conformally attaching a first heating element to the surface of the aircraft skin. Then, an electrically-insulative layer is conformally attached to the first heating element. Then a second heating element is conformally attached to the electrically-insulative layer. Finally, a heat controller provides an electrical control signal to each of the first and second heating elements.

### BRIEF DESCRIPTION OF THE DRAWINGS

FIG. 1 is a schematic diagram of an aircraft having redundant heating elements conformally attached to various regions of a surface of the aircraft skin.
FIG. 2 is a schematic diagram of ice accreting on a leading edge of a curved member of an aircraft in an airstream.
FIG. 3 is a schematic diagram depicting different zones of ice-accretion associated with different sizes of super-cooled water droplets.
FIG. 4 is a graph of exemplary relations of size of an ice-accretion region versus size of super-cooled water droplets.
FIG. 5 is a block diagram of an embodiment of a system for providing redundant heating of a surface of an aircraft skin.
FIG. 6 is a diagram illustrating an embodiment of a section of a first or second heating element.

### DETAILED DESCRIPTION

Apparatus and associated methods relate to providing redundant heating elements to a surface of an aircraft skin for the purpose of controlling ice accretion thereon. Each of the redundant heating elements can be used alone or in conjunction with the other(s) of the redundant heating elements. In some embodiments, a second heating element can be used if or when a first heating element fails and/or is insufficient to perform the heating task. In some embodiments, the first and second heating elements can be controlled so as to create a heating profile of the surface of the aircraft skin. A heat controller provides electrical control signals to the first and second heating element. In some embodiments, the heat controller can provide such electrical control signals in response to detected ice accretion, flight conditions, and/or detected atmospheric conditions.

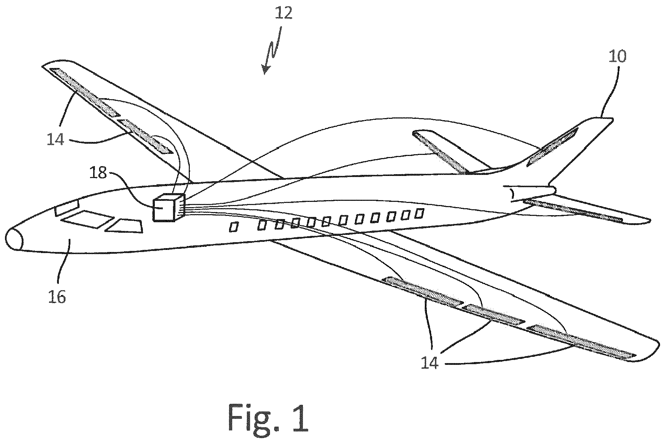

FIG. 1 is a schematic diagram of an aircraft having redundant heating elements conformally attached to various regions of a surface of the aircraft skin. In FIG. 1, aircraft 10 is equipped with redundant heating system 12. Redundant heating system 12 includes heating members 14 conformally attached to various surface regions of aircraft skin 16 and heat controller 18 electrically coupled to each of heating members 14. Heat controller 18 is configured to provide electrical control signals to each of heating members 14 so as to control ice accretion at the exterior surface of aircraft skin 16 where heating members 14 are attached.

Each of the heating members 14 includes a first heating element and a second heating element. The first and second heating elements are each configured to provide heat to substantially the same surface region of aircraft skin 14. The electrical control signals provided by heat controller 18 to each of heating members 14 includes control signals sent to each of the first and second heating elements of each of heating members 14. Heat controller 18 can provide signals that control zero, one, or both of the heating elements of each of heating members 14. In some embodiments, heat controller 18 can detect operability and/or inoperability of each of the first and second heating elements of heating members 14. Heat controller 18 can use the detected operability and/or inoperability conditions so as to provide heating of aircraft skin 16 at the various regions where heating members 14 are attached.

Heat controller 18 can generate these controller signals in various manners. For example, heat controller 18 can be activated by a pilot using an input control device. Heat controller 18 can generate heat control signals designed to establish heating profiles in the various regions of aircraft skin 16 where heat members 14 are attached. Heat controller 18 can generate the heat control signals in response to one or more of aircraft flight conditions, atmospheric conditions, and detected ice accretion on aircraft skin 16.

In some embodiments, heat controller 18 can use both of the heating elements of one or more heating members 14 in certain circumstances. For example, heating controller 18 can provide electrical current to both of the heating elements of one or more heating members, in response to detected atmospheric conditions that are conducing to ice accretion. By providing electrical current to both of the heating elements, additional heating can be provided (e.g., more heating than can be provided by a single heating element). Heating controller 18 can provide electrical current in to both the heating elements in a series-connected fashion or in a parallel-connected fashion.

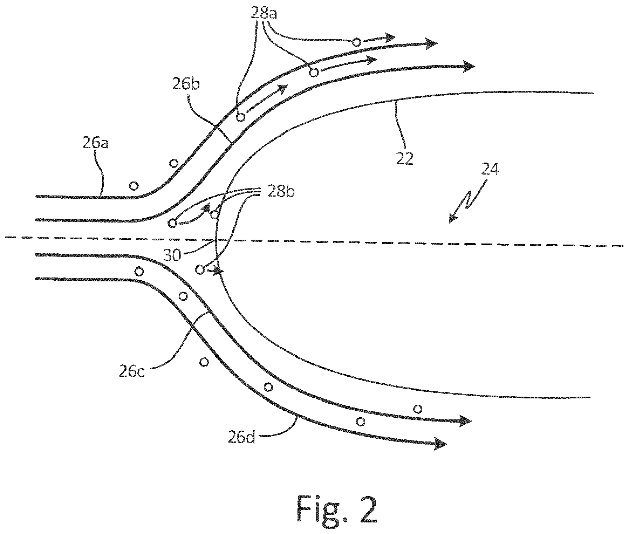

FIG. 2 is a schematic diagram of ice accreting on a leading edge of a curved member of an aircraft in an airstream. In FIG. 2, three-dimensional airfoil 22 is shown in cross section. Airfoil 22 has flow-dividing axis 24 aligned with a general direction of airflow. Airflow is represented by flow vectors 26a, 26b, 26c, 26d. Water droplets 28a, 28b are carried by the airflow. Small water droplets 28a generally follow the flow vectors, because a mass of the small water droplets 28a is small. A momentum of the small water droplets 28a is correspondingly small, because of the small mass. Because the momentum is small for small water droplets, changing the direction, and thus the momentum, of these small water droplets can be achieved by small forces, such as those imparted by flow vectors 26a, 26b, 26c, 26d. Small water droplets 28a impinge airfoil 22 only proximate flow-dividing axis 24 at leading edge 30.

Large water droplets 28b, however, have momentums that are larger than those of small water droplets 28a, due to larger masses of the large water droplets 28b. Such large water droplets 28b do not follow flow vectors 26a, 26b, 26c, 26d as readily as do small water droplets 28a. Because large water droplets 28b more readily cross flow vectors 26a, 26b, 26c, 26d, such large water droplets 28b impinge airfoil 22 along a greater section of leading edge 30 than is impinged by small water droplets 28a. Large water droplets 28b impinge airfoil 22 proximate flow-dividing axis 24 at leading edge 30 as do small water droplets 28a. Large water droplets 28b also impinge airfoil 22 aft of leading edge 30 for a distance that is related to the droplet size. Airflow does impart a force on large water droplets 28b, and therefore large water droplets 28b do experience momentum change. Because large water droplets 28b can undergo such momentum change, these large water droplets impinge airfoil 22 only over a limited range about leading edge 30.

If water droplets 28a, 28b are super-cooled (e.g., at temperatures below a freezing temperature of water), then such particles can freeze upon impact with airfoil 22 or another object (e.g., a fuselage, etc.). Pure water can be super-cooled without freezing in the absence of a nucleation site. Such a scenario is not infrequent in cloud atmospheres. The shock of impingement and/or the structural nucleation sites presented by the impinging object can cause such super-cooled water droplets to freeze almost immediately upon such an impingement event.

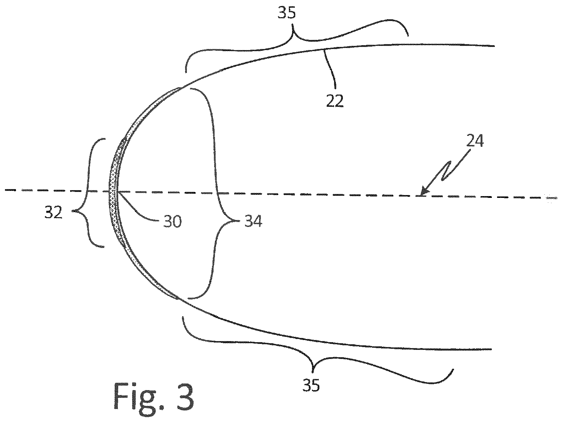

FIG. 3 is a schematic diagram depicting different zones of ice-accretion associated with different sizes of super-cooled water droplets. In FIG. 3, airfoil 22 depicted in FIG. 2 is shown in magnification to demonstrate a relationship between water droplet size and impingement region. Two different impingement regions 32, 34 are depicted proximate leading edge 30 of airfoil 22. Impingement region 32 corresponds to a small region about leading edge 30. Ice can form at both of impingement regions 32 and 34 in various atmospheric conditions having super-cooled water droplets. In such conditions, impingement regions 32 and 34 could be called ice-accretion regions 32 and 34.

Heating members 14 (depicted in FIG. 1) can be conformally attached to curved airfoil 22 so as to control ice accretion at and near leading edge 30. Heating members 14 can be attached to either an interior surface or an exterior surface of aircraft skin 16 (depicted in FIG. 1). If heating member 14 is attached to the region coincident with ice accretion region 34, for example, then heating member 14 can melt and/or prevent formation of ice accretion at impingement regions 32 and 34. When ice is melted from impingement regions 32 and 34, liquid water can flow along airfoil 22 aft of impingement regions 32 and 34. This liquid water can refreeze and form ice in run-back regions 35, for example. A temperature profile, from leading edge 30 and aft thereof, can be used to control the temperature of the liquefied water and therefore the nature of the run-back ice formation aft of impingement regions 32 and 34.

Small impingement region 32 is a region in which water droplets, which are less than or equal to a relatively small size (such as small water droplets 28a depicted in FIG. 2), can impinge, for a given set of aircraft and flying conditions. Small water droplets 28a can readily follow flow vectors 26a, 26b, 26c, 26d (depicted in FIG. 2). Flow vectors 26a, 26b show an airflow pattern above airfoil 22, and flow vectors 26c, 26d show an airflow pattern below airfoil 22. Flow vectors 26a, 26b diverge from flow vectors 26c, 26d about central axis 24. Only at locations along leading edge 30 that are proximate central axis 24 can small water droplets 28a impinge airfoil 22. The intersection of leading edge 30 and flow-dividing axis 24 can be called the stagnation point.

Large impingement region 34 includes portions of airfoil 22 which can be impinged only by water droplets that are larger than a predetermined size (such as large water droplets 28b depicted in FIG. 2) for a given set of aircraft and flying conditions. Because larger water droplets 28b can cross flow vectors 26a, 26b, 26c, 26d more readily than can small water droplets 28a, such large water droplets 28b impinge airfoil 22 within larger region (e.g., large impingement region 34) about leading edge 30 than the region (e.g., small impingement region 32) impinged by small water droplets 28a. In this way, FIG. 3 demonstrates a relation that exists between a size of water droplets and a regional area in which such sized water droplets are capable of impingement.

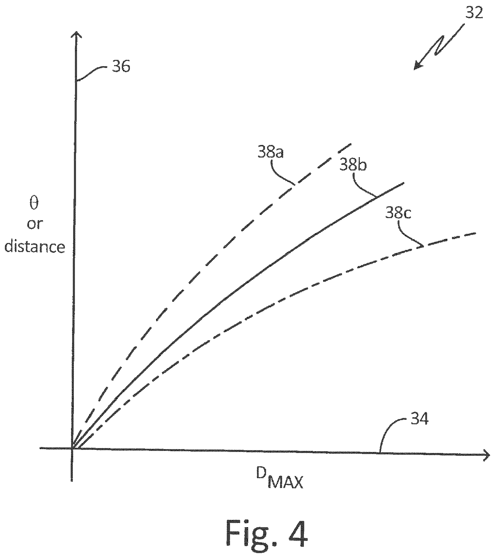

FIG. 4 is a graph of exemplary relations of size of an ice-accretion region versus size of super-cooled water droplets. In FIG. 4, graph 32 has horizontal axis 34 and vertical axis 36. Horizontal axis 34 represents maximum size D_{MAX} of water droplets in an atmosphere. Vertical axis 36 represents a distance dimension (e.g., angle θ from stagnation point or chord length d from the stagnation point) of impingement region. Graph 32 has three relations 38a, 38b, 38c. Relation 38a represents a relation between maximum size D_{MAX} of water droplets and distance dimension of impingement region for a first set of icing conditions. Relations 38b, 38c represent relations between maximum size D_{MAX} of water droplets and distance dimension of impingement region for a second and a third set of icing conditions, respectively.

Parameters that affect icing conditions can include aircraft conditions, flying conditions, and atmospheric conditions, for example. Aircraft conditions can include, for example, a shape of a structure to which water droplets impinge, temperature of a surface of the impingement region, aircraft configuration, etc. Flying conditions can include, for example, an angle of attack, an angle of side-slip, an airspeed, water droplet temperature, liquid water content, etc. Atmospheric conditions can include air temperature, air pressure, etc. Various embodiments may be more or less affected by one or more of the icing conditions. For example, some embodiments may be more or less sensitive to angle of attack. A structure that presents substantially the same shape to the airflow independent of angle of attack, for example, may be not very sensitive to angle of attack. Some geometries may be less sensitive to angle of sideslip, for example.

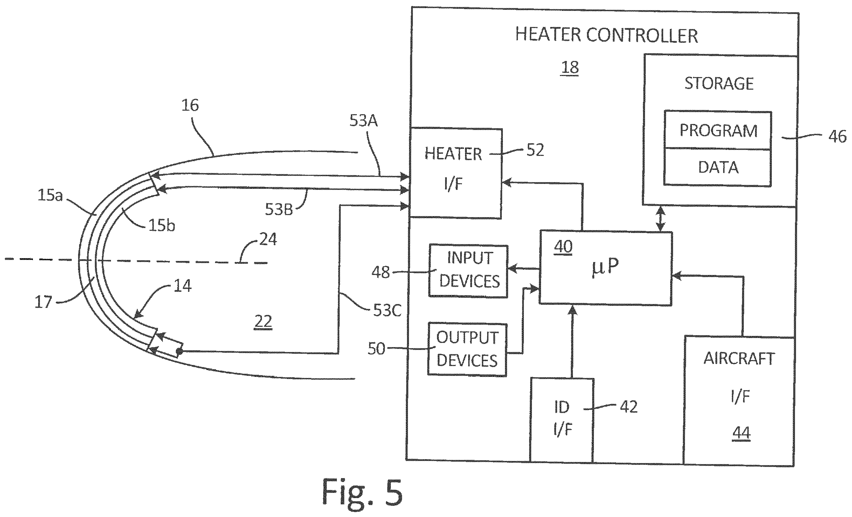

FIG. 5 is a block diagram of an embodiment of a system for providing redundant heating of a surface of an aircraft skin. In FIG. 5, heat controller 18 includes processor(s) 40, ice-detector interface 42, aircraft interface 44, storage device(s) 46, user input devices 48, user output devices 50, and heater interface 52. Storage device(s) 46 has various storage or memory locations. Storage device(s) 46 includes program memory and data memory. Heat controller 18 is in communication with heating elements 15A and 15B of heating member 14 via heater interface 52.

As illustrated in FIG. 5, heat controller 18 includes processor(s) 40, ice detector interface 42, aircraft interface 44, storage device(s) 46, user input devices 48, and user output devices 50, and heater interface 52. However, in certain examples, heat controller 18 can include more or fewer components. For instance, in examples where heat controller 18 is an avionics unit, heat controller 18 may not include user input devices 48 and/or user output devices 50. In some examples, such as where heat controller 18 is a mobile or portable device such as a laptop computer, heat controller 18 may include additional components such as a battery that provides power to components of heat controller 18 during operation.

Heater interface 52 can be configured to be electrically coupled to each of heating members 14, which are conformally attached at various locations to aircraft skin 16. In the depicted embodiment, heating member 14 is conformally attached to an interior surface of aircraft skin 16. Heating member 14 includes first heating element 15A and second heating element 15B electrically isolated from one another by electrically-insulative layer 17. First and second heating elements 15A and 15B are configured to heat substantially the same region of aircraft skin 16. In some embodiments, one of first and second heating elements 15A or 15B may extend beyond the other of heating elements 15A or 15B. In such an embodiment, redundant heating is provided in regions where both of heating elements 15A and 15B are configured to provide heat to aircraft skin 16.

In the depicted embodiments, heating interface 52 is conductively coupled to heating elements 15A and 15B using three electrical conductors 53A, 53B and 53C. First electrical conductor 53A provides electrical conductivity between heating interface 52 and a first end of first heating element 15A. Second electrical conductor 53B provides electrical conductivity between heating interface 52 and a first end of second heating element 15B. Third electrical conductor 53C provides electrical conductivity between heating interface 52 and a second end of both first and second heating elements 15A and 15B. Such electrical conductivity configuration can facilitate heating interface 52 to provide current to only first heating element 15A, to only second heating element 15B, or to first and second heating elements 15A and 15B in a series-connected fashion, or to first and second heating elements 15A and 15B in a parallel-connected fashion.

Processor(s) 40, in one example, is configured to implement functionality and/or process instructions for execution within heat controller 18. For instance, processor(s) 40 can be capable of processing instructions stored in storage device(s) 46. Examples of processor(s) 40 can include any one or more of a microprocessor, a controller, a digital signal processor (DSP), an application specific integrated circuit (ASIC), a field-programmable gate array (FPGA), or other equivalent discrete or integrated logic circuitry.

Storage device(s) 46 can be configured to store information within heat controller 18 during operation. Storage device(s) 46, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device(s) 46 is a temporary memory, meaning that a primary purpose of storage device(s) 46 is not long-term storage. Storage device(s) 46, in some examples, is described as volatile memory, meaning that storage device(s) 46 do not maintain stored contents when power to heat controller 18 is turned off. Examples of volatile memories can include random access memories (RAM), dynamic random access memories (DRAM), static random access memories (SRAM), and other forms of volatile memories. In some examples, storage device(s) 46 is used to store program instructions for execution by processor(s) 40. Storage device(s) 46, in one example, is used by software or applications running on heat controller 18 (e.g., a software program implementing long-range cloud conditions detection) to temporarily store information during program execution.

Storage device(s) 46, in some examples, also include one or more computer-readable storage media. Storage device(s) 46 can be configured to store larger amounts of information than volatile memory. Storage device(s) 46 can further be configured for long-term storage of information. In some examples, storage device(s) 46 include non-volatile storage elements. Examples of such non-volatile storage elements can include magnetic hard discs, optical discs, flash memories, or forms of electrically programmable memories (EPROM) or electrically erasable and programmable (EEPROM) memories.

Aircraft interface 44 can be used to communicate information between heat controller 18 and an aircraft. In some embodiments, such information can include aircraft conditions, flying conditions, and/or atmospheric conditions. In some embodiments, such information can include data processed by heat controller 18, such as, for example, alert signals. Aircraft interface 44 can also include a communications module. Aircraft interface 44, in one example, utilizes the communications module to communicate with external devices via one or more networks, such as one or more wireless or wired networks or both. The communications module can be a network interface card, such as an Ethernet card, an optical transceiver, a radio frequency transceiver, or any other type of device that can send and receive information. Other examples of such network interfaces can include Bluetooth, 3G, 4G, and Wi-Fi 33 radio computing devices as well as Universal Serial Bus (USB). In some embodiments, communication with the aircraft can be performed via a communications bus, such as, for example, an Aeronautical Radio, Incorporated (ARINC) standard communications protocol. In an exemplary embodiment, aircraft communication with the aircraft can be performed via a communications bus, such as, for example, a Controller Area Network (CAN) bus.

User input devices 48, in some examples, are configured to receive input from a user. Examples of user input devices 48 can include a mouse, a keyboard, a microphone, a camera device, a pressure-sensitive and/or touch-sensitive display, push buttons, arrow keys, or other type of device configured to receive input from a user. In some embodiments, input communication from the user can be performed via a communications bus, such as, for example, an Aeronautical Radio, Incorporated (ARINC) standard communications protocol. In an exemplary embodiment, user input communication from the user can be performed via a communications bus, such as, for example, a Controller Area Network (CAN) bus.

User output devices 50 can be configured to provide output to a user. Examples of user output devices 50 can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines. In some embodiments, output communication to the user can be performed via a communications bus, such as, for example, an Aeronautical Radio, Incorporated (ARINC) standard communications protocol. In an exemplary embodiment, output communication to the user can be performed via a communications bus, such as, for example, a Controller Area Network (CAN) bus.

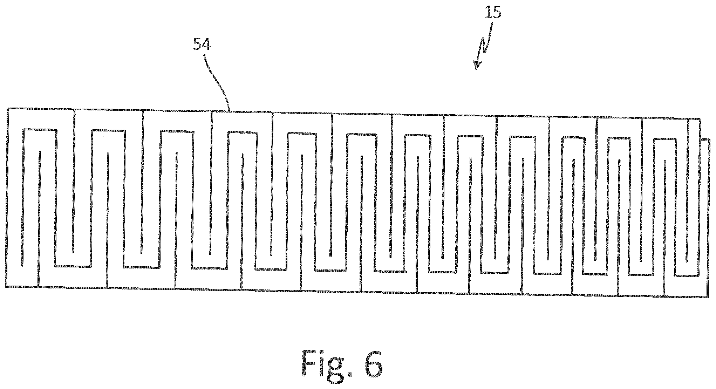

FIG. 6 is a diagram illustrating an embodiment of a section of a first or second heating element. In FIG. 6, heating element 15 is a metallic-film style of a heating element. Heating element 15 includes a serpentine patterned metal resistor 54. Various types of conductors can be used as serpentine resistive elements. For example, in some embodiments metallic and/or composite foils can be used. Various elemental and/or alloys of metals can be used as metallic foils. For example, copper, Nickel, stainless steel, and nickel-alloys can be used as resistive heating elements.

Various other types of heating elements can be employed in redundant heating system 10 (depicted in FIG. 1). For example, carbon nanotubes can be formed into resistive heating elements. Various other resistive materials can be formed into planer resistive sheets configured to be conformally attached to a surface of an aircraft skin.

The following are non-exclusive descriptions of possible embodiments of the present invention.

Apparatus and associated methods relate to a system for providing redundant heating of a surface of an aircraft skin. The system includes a heating member. The heating member includes a first heating element configured to conformally attach to the surface of the aircraft skin. The heating member includes an electrically-insulative layer configured to conformally attach to the first heating member. The heating member also includes a second heating element configured to conformally attach to the electrically-insulative layer. The system also includes a heat controller electrically coupled to the first and second heating elements and configured to provide an electrical control signal to each of the first and second heating elements.

The system of the preceding paragraph can optionally include, additionally and/or alternatively, any one or more of the following features, configurations and/or additional components:
A further embodiment of the foregoing system, wherein each of the first and second heating elements can include a resistive heating element.

A further embodiment of any of the foregoing systems, wherein each of the first and second heating elements can include a composite heating element.

A further embodiment of any of the foregoing systems, wherein each of the first and second heating elements can include carbon nanotubes.

A further embodiment of any of the foregoing systems, wherein each of the first and second heating elements can include a metallic foil heating element configured in a serpentine fashion.

A further embodiment of any of the foregoing systems, wherein the metallic foil heating element can include copper, nickel, and/or stainless steel.

A further embodiment of any of the foregoing systems, wherein the heat controller can be configured to control, in response to detected atmospheric conditions, a heating profile of the first and second heat controllers.

A further embodiment of any of the foregoing systems, wherein the electrical control signals can be configured such that only one of the first and second heating elements actively provides heat to the surface of the aircraft skin.

A further embodiment of any of the foregoing systems, wherein the heat controller can be configured to control, in response to detected ice accretion on an exterior surface of the aircraft, a heating profile of the first and second heat controllers.

A further embodiment of any of the foregoing systems, wherein the electrical control signals can be configured to provide heat to the surface of the aircraft skin via only one of the first and second heating elements.

A further embodiment of any of the foregoing systems, wherein the heat controller can be further configured to detect operability and/or inoperability of each of the first and second heating elements.

A further embodiment of any of the foregoing systems, wherein the electrical control signals, in response to detecting inoperability of the first heating element, can be configured to prevent the first heating element from actively providing heat to the surface of the aircraft skin and to cause the second heating element to actively provide heat to the surface of the aircraft skin.

Some embodiments relate to a method for providing redundant heating of a surface of an aircraft skin. The method includes conformally attaching a first heating element to the surface of the aircraft skin. The method includes conformally attaching an electrically-insulative layer to the first heating element. The method includes conformally attaching a second heating element to the electrically-insulative layer. The method also includes providing, via a heat controller, an electrical control signal to each of the first and second heating elements.

The method of the preceding paragraph can optionally include, additionally and/or alternatively, any one or more of the following features, configurations and/or additional components:

A further embodiment of the foregoing method, wherein each of the first and second heating elements can include a resistive heating element.

A further embodiment of any of the foregoing methods, wherein conformally attaching the first heating element to the surface of the aircraft skin can include conformally attaching the first heating element to an interior surface of the aircraft skin.

A further embodiment of any of the foregoing methods, wherein conformally attaching the first heating element to the surface of the aircraft skin can include conformally attaching the first heating element to an exterior surface of the aircraft skin.

A further embodiment of any of the foregoing methods can further include controlling, via the heat controller and in response to detected atmospheric conditions, a heating profile of the first and second heat controllers.

A further embodiment of any of the foregoing methods can further include controlling, via the heat controller and in response to detected ice accretion on an exterior surface of the aircraft, a heating profile of the first and second heat controllers.

A further embodiment of any of the foregoing methods, can further include detecting, via the heat controller, operability and/or inoperability of each of the first and second heating elements.

A further embodiment of any of the foregoing methods, wherein the electrical control signals, in response to detecting inoperability of the first heating element, are configured to actively prevent the first heating element from providing heat to the surface of the aircraft skin and to cause the second heating element to actively provide heat to the surface of the aircraft skin.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for providing redundant heating of a surface of an aircraft skin (16), the system comprising:
a heating member (14) that includes:
a first heating element configured to conformally attach to the surface of the aircraft skin;
an electrically-insulative layer configured to conformally attach to the first heating member; and
a second heating element configured to conformally attach to the electrically-insulative layer; and
a heat controller (18) electrically coupled to the first and second heating elements and configured to provide an electrical control signal to each of the first and second heating elements.

2. The system of claim 1, wherein each of the first and second heating elements comprises a resistive heating element.

3. The system of claim 1, wherein each of the first and second heating elements comprises a composite heating element.

4. The system of claim 1, wherein each of the first and second heating elements comprises carbon nanotubes.

5. The system of claim 1, wherein each of the first and second heating elements comprises a metallic foil heating element configured in a serpentine fashion.

6. The system of claim 5, wherein the metallic foil heating element comprises copper, nickel, and/or stainless steel.

7. The system of any preceding claim, wherein the heat controller (18) is configured to control, in response to detected atmospheric conditions, a heating profile of the first and second heat controllers.

8. The system of claim 7, wherein the electrical control signals are configured such that only one of the first and second heating elements actively provides heat to the surface of the aircraft skin.

9. The system of any preceding claim, wherein the heat controller (18) is configured to control, in response to detected ice accretion on an exterior surface of the aircraft, a heating profile of the first and second heat controllers.

10. The system of claim 9, wherein the electrical control signals are configured to provide heat to the surface of the aircraft skin via only one of the first and second heating elements.

11. The system of any preceding claim, wherein the heat controller (18) is further configured to detect operability and/or inoperability of each of the first and second heating elements.

12. The system of claim 11, wherein the electrical control signals, in response to detecting inoperability of the first heating element, are configured to prevent the first heating element from actively providing heat to the surface of the aircraft skin (16) and to cause the second heating element to actively provide heat to the surface of the aircraft skin (16).

13. A method for providing redundant heating of a surface of an aircraft skin (16), the method comprising:
conformally attaching a first heating element to the surface of the aircraft skin;
conformally attaching an electrically-insulative layer to the first heating element;
conformally attaching a second heating element to the electrically-insulative layer; and
providing, via a heat controller (18), an electrical control signal to each of the first and second heating elements.

14. The method of claim 13, further comprising:
controlling, via the heat controller (18) and in response to detected atmospheric conditions, a heating profile of the first and second heat controllers.

15. The method of claims 13 or 14, further comprising:
detecting, via the heat controller (18), operability and/or inoperability of each of the first and second heating elements.
